## Europäisches Patentamt

## European Patent Office

## Office européen des brevets

(19)

(11) Numéro de publication: **0 252 859 B1**

(12) **FASCICULE DE BREVET EUROPEEN**

(45) Date de publication du fascicule du brevet:
**29.08.90**

(51) Int. Cl.⁵: **C25C 3/12, C04B 35/52**

(21) Numéro de dépôt: **87420171.8**

(22) Date de dépôt: **22.06.87**

(54) **Procédé de réglage de la teneur en brai des anodes destinées à la production d'aluminium par électrolyse.**

(30) Priorité: **24.06.86 FR 8609805**

(43) Date de publication de la demande:
**13.01.88 Bulletin 88/2**

(45) Mention de la délivrance du brevet:
**29.08.90 Bulletin 90/35**

(84) Etats contractants désignés:
**AT CH DE ES GB GR IT LI NL SE**

(56) Documents cités:
**FR-A- 2 436 763**

**CHEMICAL ABSTRACTS,**
**vol. 72, no. 12, 23 mars 1970, page 183, résumé**
**no. 57893j, Columbus, Ohio, US; M.F. KESSLER et al.:**
**"Control of binder content in green carbon-containing**
**masses", & FREIBERG. FORSCHUNGSH.**
**A 1969, 473, 35-46**

(73) Titulaire: **ALUMINIUM PECHINEY, 23, rue Balzac,**
**F-75008 Paris Cédex 08(FR)**

(72) Inventeur: **Vanvoren, Claude, L'Echaillon-Hermillon,**
**F-73300 St Jean de Maurienne(FR)**

(74) Mandataire: **Pascaud, Claude et al, PECHINEY 28, rue de**
**Bonnel, F-69433 Lyon Cédex 3(FR)**

## Description

L'invention concerne un procédé de régulation de la teneur en brai des anodes destinées à la production d'aluminium par électrolyse, selon le procédé Hall-Héroult.

## EXPOSE DU PROBLEME

Les anodes dites "précuites" sont obtenues par malaxage à chaud d'un agrégat (le plus souvent du coke) et d'un liant (le plus souvent du brai), mise en forme de la pâte carbonée ainsi obtenue, par vibro-tassage, pressage ou vibro-pressage et cuisson à température élevée (1100/1200°C).

La qualité des anodes a une influence déterminante sur la bonne marche et sur le rendement énergétique de l'électrolyse, et un des soucis permanents des exploitants est l'optimisation de la fabrication des anodes qui se traduit, entre autres, par la recherche d'une densité maximale du produit cuit. Ceci a pour intérêt l'augmentation de la durée du cycle d'anode sur la cuve d'électrolyse et la diminution du nombre de blocs à fabriquer pour une consommation équivalente en carbone.

La densité du produit cuit est essentiellement fonction de trois paramètres : la densité sèche du produit cru, le rendement de cokéfaction du liant et les variations volumiques en cours de cuisson.

Ces trois paramètres ne sont pas indépendants et varient en fonction de la teneur en liant du produit cru.

L'expérience montre que pour un couple de matières premières (coke, brai), pour des conditions de fabrication (granulométrie, malaxage, etc...) et de mise en forme de la pâte données, la courbe de densité cuite en fonction de la teneur en liant passe par un maximum pour la teneur qui permet l'obtention du maximum de densité sèche sur le produit cru.

## BASE THEORIQUE DU PROBLEME

L'étude de la structure des anodes carbonées a été fortement influencée par la mécanique des sols.

Il est connu en mécanique des milieux polyphasiques que le compactage d'un sol à teneur en eau variable conduit à une courbe de densité sèche qui présente un maximum, la densité sèche pouvant être définie comme la densité des matières sèches dans le milieu compacté.

Lorsque la contrainte de compactage augmente (compactage statique ou dynamique) le maximum de densité s'élève en même temps que la teneur en eau correspondante décroît.

Ce résultat s'interprète par la notion de teneur en eau à saturation, teneur au-delà de laquelle, pour une contrainte donnée, le niveau de densité diminue en raison de l'écartement des grains de la matrice solide par le liquide.

L'ensemble des courbes obtenues en faisant varier la contrainte de compactage se placent en deçà d'un courbe enveloppe, dite courbe de saturation, qui définit, pour une teneur en eau donnée, la densité maximale susceptible d'être atteinte (SUBBARAO, Thèse de Doctorat, Grenoble 1972, "Compactage et mécanique des milieux continus").

Application aux pâtes carbonées :

Le compactage des produits carbonés peut être traité par analogie avec les sols dans la mesure où ils présentent également :
- un milieu gazeux : l'air
- un milieu liquide : le liant carboné (brai, résines, goudron)
- un milieu solide : la matrice carbonée (coke de pétrole, de brai, anthracite ...).

Une différence majeure réside cependant dans la structure poreuse de l'agrégat solide.

L'accessibilité à cette porosité varie en effet en fonction de la contrainte de compactage. Ce phénomène a pour conséquence la disparition de l'unicité de la courbe de saturation. En résumé, pour une teneur en brai donnée une augmentation de la contrainte de compactage peut améliorer la densité à saturation du produit mais ce phénomène est cependant du deuxième ordre par rapport à l'influence du taux de liant.

## INCONVENIENTS DE L'ART ANTERIEUR

L'art antérieur consistait le plus souvent à rechercher le maximum de densité de l'anode compactée crue. Comme ce mode de réglage conduit à une augmentation régulière du taux de brai, cette évolution était tempérée soit par l'aspect visuel des anodes en sortie de compacteuse (aspect gras), soit par une gamme de teneur en brai donnée a priori (au-delà de cette gamme on savait que l'on allait avoir des "collages" entre les anodes dans le four de cuisson).

Certains modes de réglage ont cependant été élaborés. C'est le cas dans le brevet d'ALCOA (FR 2 436 763 = US 4 133 090) qui opère par mesure de l'affaissement de l'anode crue dans les instants qui suivent la sortie du moule de compactage. On régule alors la teneur en brai pour minimiser ou optimiser l'affaissement, en corrélation avec la densité de l'anode. Ceci signifie que cette optimisation, après un changement des paramètres de fabrication (matières premières, granulométrie ...) ne peut en toute rigueur être appliquée qu'après avoir eu connaissance des caractéristiques des anodes cuites, c'est-à-dire avec un temps de réponse de plusieurs jours, incompatible avec la fabrication des anodes crues. En pratique, on est alors conduit à viser un affaissement moyen qui garantit qu'on ne s'écartera pas notablement de l'optimum.

## OBJET DE L'INVENTION

L'objet de l'invention est un procédé de réglage de la fabrication de l'anode crue (en jouant sur le taux de brai) qui permet de maximiser la densité de l'anode cuite, sans avoir à attendre les résultats de la cuisson.

Pour un niveau de qualité de coke de pétrole donné et constant, la densité apparente cuite de l'anode dépend alors essentiellement de la densité sèche de l'anode crue. Celle-ci traduit directement le compactage effectif des matières sèches dans l'anode.

Cette densité sèche est reliée à la densité apparente crue de l'anode et à la teneur en brai par la relation :

DS = DA crue x (100 - % brai)/100 avec : DS = la densité sèche de l'anode crue, DA crue : la densité apparente de l'anode crue (telle qu'on la mesure directement), % brai = la teneur en brai exprimée en pourcentage pondéral par rapport à la pâte.

Pour un couple donné de matières premières et pour des conditions de fabrication (granulométrie) malaxage,...) et de mise en forme de la pâte données, la densité sèche des anodes crues obtenues passe par un optimum pour une certaine teneur en brai.

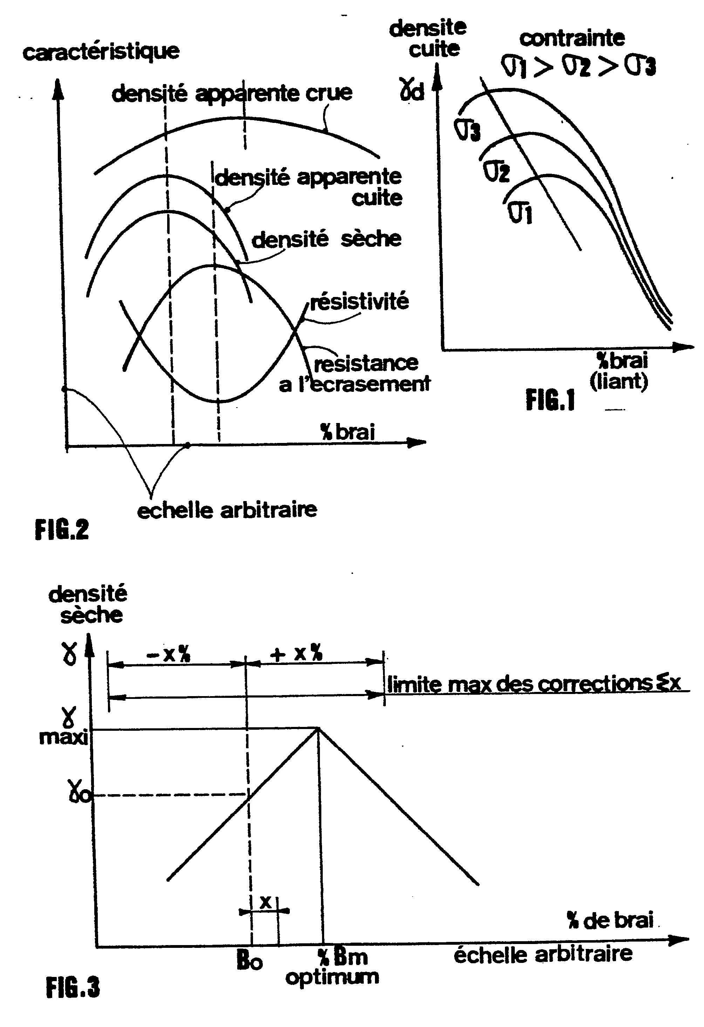

Les figures 1 à 3 montrent en réprésentation simplifiée, avec des échelles arbitraires, comment évoluent les caractéristiques des anodes en fonction de la teneur en brai.

. La figure 1 montre la variation de la densité sèche de l'anode crue, en fonction de la teneur en liant, avec comme paramètre, la contrainte exercée lors de la mise en forme.

. La figure 2 montre la variation des principaux paramètres des anodes en fonction de la teneur en brai pour un niveau de contrainte de compactage donné.

. La figure 3 schématise le principe du procédé de régulation de la teneur en brai, selon l'invention.

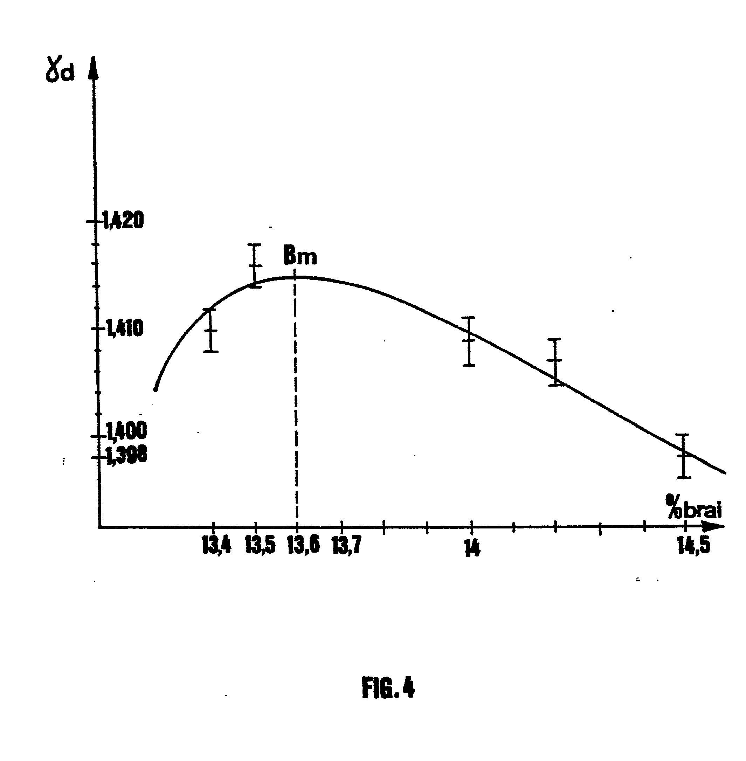

. La figure 4 montre l'application pratique de l'invention.

La teneur en brai optimale, qui permet d'obtenir la densité apparente cuite maximale apparaît sur la figure 2. On constate qu'elle correspond à celle qui permet d'obtenir la densité sèche maximale de l'anode crue. Le procédé, objet de l'invention, permet donc d'optimiser la densité apparente cuite des anodes en ne prenant en compte que des mesures sur anodes crues, en sortie de compactage, donc disponibles immédiatement pour piloter le système de régulation.

De plus, cet optimum de densité sèche est relatif et varie évidemment avec les paramètres de fabrication (matières premières, granulométrie,...). De ce fait, à l'exception de périodes de transition, l'optimisation de la densité sèche conduit dans tous les cas à l'optimisation de la densité cuite.

Le procédé, objet de l'invention, comporte la succession des opérations suivantes :

Le malaxeur de pâte carbonée est alimenté :

- d'une part en coke broyé, ayant une répartition granulométrique prédéterminée, que l'on maintient constante, le taux d'alimentation en coke étant également maintenu constant,

- d'autre part, en brai dont le pourcentage $B_0$ % par rapport au coke est réglable, soit manuellement, par l'opérateur, soit par un automate programmable ou commandé par microprocesseur.

En sortie de malaxeur, la pâte carbonée est introduite dans la compacteuse, et les anodes compactées sont évacuées sur une table à rouleaux.

Dans le cas d'un malaxeur discontinu, une charge de pâte carbonée a une composition constante. Toute modification du taux de brai se répercute donc sur l'ensemble des N anodes produites à partie de la charge. Dans le cas d'un malaxeur continu, il y a un décalage entre l'instant où l'on modifie la teneur en brai en tête du malaxeur et celui où apparaît la première anode compactée dont la pâte a la composition modifiée. Ce décalage est appelé "d" (en pratique, il peut être de 3 à 6 anodes). Le calculateur est alors programmé pour en tenir compte.

La densité apparente de l'anode crue est établie à partir du poids et du volume de l'anode.

Le poids est mesuré avec une marge d'erreur inférieure à 0,1 %. L'expérience montre que les dimensions longueur et largeur, après compactage, peuvent être considérées comme constantes, avec une précision analogue, pour des teneurs en brai ne s'écartant pas de plus de 1% (absolu) par rapport à la valeur moyenne. Il suffit donc de mesurer la hauteur H de l'anode compactée, pour connaître son volume. On introduit dans le calculateur: le poids mesuré, la longueur et la largeur (constantes, mais que l'on peut corriger si nécessaire), et la hauteur mesurée ainsi que le taux de brai.

On a donc: DA crue = Poids de l'anode P/[(H-ho) x L x 1] + Vo, Vo étant le volume de la "tête" de l'anode, c'est-à-dire de la partie supérieure qui comporte les chanfreins, les bouchons d'anodes et dépouilles diverses éventuelles, ho étant la hauteur de la tête de l'anode.

Densité sèche de l'anode crue: DS = DA crue x (100–% brai)/100.

Ces données sont introduites dans un calculateur.

Le calculateur prend également en compte une teneur initiale en brai Bo %, que l'on fixe selon l'expérience de la fabrication; les anodes produites dans ces conditions ont une densité sèche que l'on appelle $\gamma(Bo)$.

Puis:

1. On incrémente la teneur en brai initiale Bo d'une valeur x (par exemple : 0,1 ou 0,2% absolus). Les anodes produites avec cette nouvelle teneur en brai Bo+x ont une densité sèche $\gamma$ (Bo+x), qui est mesurée en moyenne sur p anodes (par exemple 5 à 20, de préférence 10) pour s'affranchir des petites fluctuations.

L'incrément x peut être positif ou négatif.

2. On compare $\gamma$ (Bo+x) à $\gamma$ (Bo)(valeurs moyennes).

Si $\gamma$ (Bo+x) $\gamma$ (Bo, on incrémente Bo+x d'une valeur x, de même signe que la valeur précédente.

Si $\gamma$ (Bo+x) $\gamma$ (Bo), on incrémente Bo+x d'une valeur x mais de signe opposé à la valeur précédente, et ainsi de suite, chaque stade du procédé consistant à comparer la valeur de densité obtenue au stade considéré avec la valeur obtenue au state précédent.

On peut justifier cet algorithme en remarquant que si l'augmentation de Bo (incrément x positif) conduit à une augmentation de densité sèche des anodes, cela montre que l'on est en dessous de l'optimum Bm, alors que si cette augmentation de Bo conduit à une diminution de la densité sèche, on a selon toute vraisemblance, dépassé l'optimum Bm.

De même, si une diminution de Bo (incrément x négatif) conduit à une diminution de la densité sèche, cela montre que l'on est très vraisemblablement en dessous de la teneur optimale Bm, alors que si cette diminution de Bo conduit à une augmentation de la densité sèche, on doit être au-dessus de l'optimum Bm

3. Si l'une quelconque des comparaisons entre $\gamma(Bo+nx)$ et $\gamma(Bo+(n+1)x)$ conduit à une égalité, on peut donner comme instruction à l'opérateur, ou à l'automate :
- soit de maintenir la teneur en brai inchangée à la valeur Bo +(n+1)x;
- soit de passer à [Bo +(n+1)x] + x', avec x' positif ou négatif, cette opération pouvant être effectuée avec un incrément x' égal à x ou inférieur à x (par exemple x' = x/2) de façon à ne pas trop s'écarter du Bm optimal, si l'on estime que l'on se trouve maintenant au voisinage de cette valeur.

4. On fixe une limite maximale aux variations de Bo. Cette limite, Bo ± X (fig. 3) peut être fixée à n pas d'incrémentation de x. Chacun de ces pas pouvant avoir par exemple une valeur de 0,1 ou 0,2 % de brai (en % absolu) et X pouvant être fixé par exemple à ± 0,5 ou 0,6 % (absolus).

5. De même, pour éviter des variations de trop grande amplitude autour de la valeur optimale Bm, on peut après un certain temps de mise en équilibre recaler la valeur initiale Bo de la teneur en brai et lui donner une nouvelle valeur égale ou sensiblement égale à la valeur optimale Bm, telle qu'on peut la déduire de la courbe réelle de variation de la densité sèche en fonction de la teneur en brai qui apparaît sur la figure 4, et que le calculateur peut établir automatiquement.

L'ensemble de ces opérations peut être effectué, comme on l'a précédemment indiqué :
- soit manuellement : dans ce cas, l'opérateur relève les données qui lui sont fournies par le calculateur et procède aux incrémentations x dans le sens indiqué et dans les limites fixées pour les variations totales de X = Σx;
- soit automatiquement, les données du calcul étant introduites dans un automate programmable ou piloté par microprocesseur, affichant et/ou éditant l'évolution des différents paramètres.

Sur la figure 4, on a tracé une courbe expérimentale en faisant décrire à la teneur en brai toute la gamme de 13,4 à 14,5 %.

On observe que, pour chaque valeur de la teneur en brai, les valeurs mesurées de la densité sèche se regroupent sur une ligne de dispersion ayant une amplitude d'environ + 0,002 points de valeur absolue de la densité sèche.

## EXEMPLE D'APPLICATION

Sur une ligne de fabrication d'anodes destinées à une série de cuves d'électrolyse, on a fixé Bo à 13,4 % de brai, x à 0,1 % et X à ± 0,6 %. On a constaté que le régulateur optimisait la teneur en brai aux environs de 13,6 %, correspondant à une densité maximale (densité sèche) de 1,416, soit une densité crue de 1,638, valeur exceptionnellement élevée, qui assure aux anodes cuites un très haut niveau de qualité.

La mise en oeuvre de l'invention n'est pas limitée à la fabrication des anodes : tout bloc carboné obtenu par mis en forme de pâte carbonée par vibro-tassage, pilonnage ou pressage ou vibro-pressage peut être obtenu sous une densité sèche maximale en réglant la teneur en brai selon l'invention.

## Revendications

1. Procédé de réglage de la teneur en brai des anodes précuites destinées à la production d'aluminium par électrolyse, à une valeur optimale Bm correspondant au maximum de densité sèche des anodes, ces anodes étant produites par malaxage à chaud d'un agrégat carbone broyé et d'un brai cokéfiable introduit en proportion réglable, puis mise en forme par compactage et cuisson ultérieure à température élevée, caractérisé par la succession répétitive des étapes suivantes:

1. On fixe a priori une teneur initiale Bo en brai (en pourcentage pondéral par rapport à la pâte carbonée).
On calcule la densité sèche moyenne $\gamma$ (Bo) d'un nombre p d'anodes obtenues à partir de la pâte carbonée ayant Bo % de brai, par mesure de sa hauteur H en sortie de compactage et de son poids P. (la longueur et la largeur étant considérées comme constantes dans les limites du procédé).
On fait varier le pourcentage de brai d'un incrément x positif ou négatif, qui amène à (Bo + x)%.
On calcule la densité sèche moyenne $\gamma$ (Bo + x) d'un nombre p d'anodes obtenues à partir de la pâte carbonée ayant (Bo + x)% de brai.
2) On compare $\gamma$ (Bo + x) à $\gamma$ (Bo).
Si $\gamma$ (Bo + x) > $\gamma$ (Bo), on incrémente Bo + x d'une valeur x de même signe que l'incrément précédent.
Si $\gamma$ (Bo + x) > $\gamma$ (Bo) on incrémente Bo + x d'une valeur x de signe opposé à l'incrément précédent; et ainsi de suite, de façon répétitive.
Si l'une quelconque des comparaisons entre $\gamma$ (Bo + nx) et $\gamma$ (Bo + (n+1)x) conduit à une égalité, on peut:
– soit maintenir la teneur en brai inchangée à la valeur Bo + (n+1)x ;
– soit passer à [Bo + (n+1)x] + x', avec x' positif ou négatif.

2. Procédé selon revendications 1, caractérisé en ce que l'on fixe une limite maximale ± X aux variations de Bo.

3. Procédé selon l'une des revendications 1 à 2, caractérisé en ce que l'on établit la courbe de variation réelle de la densité sèche en fonction de la teneur en brai et l'on en déduit la valeur optimale Bm correspondant au maximum de densité sèche des anodes.

4. Procédé, selon revendication 1, caractérisé en ce que, après un certain temps de mise en équilibre, on recale la valeur initiale Bo de la teneur en brai à une nouvelle valeur égale ou sensiblement égale à la valeur optimale Bm.

5. Procédé selon l'une quelconque des revendications 1 à 4, caractérisé en ce que l'on fixe la valeur absolue de l'incrément x entre 0,1 et 0,2% et la variation maximale de la teneur en brai à Bo ± 0,6%.

6. Procédé selon l'une quelconque des revendications 1 à 5, caractérisé en ce que les paramètres Bo, γ, H, P, X et x sont introduits dans un calculateur qui indique à un opérateur le signe de l'incrément x à appliquer, pour chaque étape du procédé.

7. Procédé selon l'une quelconque des revendications 1 à 6, caractérisé en ce que les paramètres Bo, γ, H, P, X et x sont introduits dans un calculateur relié à un automate programmable ou piloté par microprocesseur, qui assure l'application de l'incrément x à chaque étape du procédé.

## Patentansprüche

1. Verfahren zur Regulierung des Pechgehalts der zur Aluminiumerzeugung durch Elektrolyse bestimmten, vorgebrannten Anoden auf einen optimalen, dem Trockendichtemaximum der Anoden entsprechenden Optimalwert Bm, welche Anoden durch Warmverkneten einer Masse zerkleinerten Kohlenstoffs und eines in regulierbarem Anteil eingeführten, verkokbaren Pechs danach Formgebung durch Kompaktierung und späteres Brennen bei hoher Temperatur erzeugt werden, gekennzeichnet durch die wiederholte Abfolge der folgenden Schritte:

1) Man legt vorab einen Anfangsgehalt Bo an Pech (in Gewichtsprozent bezüglich der kohlenstoffhaltigen Paste) fest.
Man berechnet die mittlere Trockendichte γ (Bo) einer Anzahl p von aus der kohlenstoffhaltigen Paste mit Bo % Pech erhaltenen Anoden durch Messen ihrer Höhe am Kompaktierungsaustritt und ihres Gewichts p (wobei die Länge und die Breite als konstant in den Grenzen des Verfahrens betrachtet werden).
Man läßt den Prozentsatz an Pech um ein positives oder negatives Inkrement x variieren, das zu (Bo + x)% führt.
Man berechnet die mittlere Trockendichte γ (Bo + x) einer Anzahl p von aus der kohlenstoffhaltigen Paste mit (Bo + x)% Pech erhaltenen Anoden.
2) Man vergleicht γ (Bo + x) mit γ (Bo).
Wenn γ (Bo + x) > γ (Bo) ist, verändert man Bo + x um einen Wert x gleichen Vorzeichens wie das vorherige Inkrement.
Wenn γ (Bo + x) < γ (Bo) ist, verändert man Bo + x um einen Wert x mit dem vorherigen Inkrement entgegengesetztem Vorzeichen; usw. in wiederholter Weise.
Wenn irgendeiner der Vergleiche zwischen γ (Bo + nx) und γ (Bo + (n+1)x) zu einer Gleichheit führt, kann man:
– entweder den gegenüber dem Wert Bo +(n+1)x unveränderten Pechgehalt beibehalten;
– oder zu (Bo + (n+1)x) + x' mit positivem oder negativem x' übergehen).
2. Verfahren nach Anspruch 1, dadurch gekennzeichnet, daß man für die Änderungen von Bo eine maximale Grenze ± X festlegt.
3. Verfahren nach einem der Ansprüche 1 bis 2, dadurch gekennzeichnet, daß man die Kurve tatsächlicher Änderung der Trockendichte als Funktion des Pechgehalts anfertigt und daraus den dem Trockendichtemaximum der Anoden entsprechenden Optimalwert Bm ableitet.

4. Verfahren nach Anspruch 1, dadurch gekennzeichnet, daß man nach einer zuverlässigen Gleichgewichtseinstellungszeit den Anfangswert Bo des Pechgehalts auf einen neuen, dem Optimalwert Bm gleichen oder im wesentlichen gleichen Wert umstellt.

5. Verfahren nach irgendeinem der Ansprüche 1 bis 4, dadurch gekennzeichnet, daß man den absoluten Wert des Inkrements x zwischen 0,1 und 0,2% und die maximale Variation des Pechgehalts auf Bo ± 0.6% festlegt.

6. Verfahren nach irgendeinem der Ansprüche 1 bis 5, dadurch gekennzeichnet, daß die Parameter Bo, γ, H, P, X und x in einen Rechner eingegeben werden, der einer Bedienungsperson das Vorzeichen des zu verwendenden Inkrements x für jeden Schritt des Verfahrens anzeigt.

7. Verfahren nach irgendeinem der Ansprüche 1 bis 6, dadurch gekennzeichnet, daß die Parameter Bo, γ, H, P, X, x in einen Rechner eingegeben werden, der mit einem programmierbaren oder durch Mikroprozessor gesteuerten Automat verbunden ist, der die Verwendung des Inkrements x in jedem Schritt des Verfahrens sichert.

## Claims

1. A process for adjusting the pitch content of prebaked anodes intended for the production of aluminium by electrolysis to an optimum value Bm corresponding to the maximum dry density of the anodes, these anodes being produced by the hot mixing of a crushed carbon aggregate and a coking pitch introduced in an adjustable proportion, then shaping by compacting and subsequent baking at high temperature, characterised by the repetition of the following stages:

1) An initial content Bo of pitch (as a percentage by weight relative to the carbonaceous paste) is fixed beforehand. The mean dry density γ (Bo) of a number p of anodes obtained from the carbonaceous paste having Bo % of pitch is calculated by measuring its height H as it leaves the compacting treatment and its weight P (the length and width being considered as constant within the limits of the process) . The percentage of pitch is varied by a positive or negative increment x which leads to (Bo + x)%.
The mean dry density g (Bo + x) of a number p of anodes obtained from the carbonaceous paste having (Bo + x)% of pitch is calculated.
2) γ (Bo + x) is compared to γ (Bo).
If γ (Bo + X) > γ (Bo), Bo + x is incremented by a value x having the same sign as the previous increment.
If γ (Bo + x) < γ (Bo), Bo + x is incremented by a value x having a sign opposed to the previous increment; and this procedure is repeated.
If one of the comparisons between γ (Bo + nx) and γ (Bo + (n+1)x) leads to equality,

— the pitch content can be left unchanged at the value Bo + (n+1)x, or

— [Bo +(n+1) x] +x' can be adopted, wherein x' is positive or negative.

2. A process according to claim 1, characterised in that the maximum limit ± x is imposed on the variations of Bo.

3. A process according to one of claims 1 to 2, characterised in that the curve of actual variation of the dry density is established as a function of the pitch content and the optimum value Bm corresponding to the maximum dry density of the anodes is deduced from it.

4. A process according to claim 1, characterised in that, after a certain balancing period, the initial value Bo of the pitch content is reset to a new value which is equal or substantially equal to the optimum value Bm.

5. A process according to any one of claims 1 to 4 characterised in that the absolute value of the increment is fixed between 0.1 and 0.2% and the maximum variation of the pitch content at Bo ± 0.6%.

6. A process according to any one of claims 1 to 5, characterised in that the parameters Bo, $\gamma$, H, P, X and x are introduced into a computer which indicates to an operator the sign of the increment x to be applied for each stage of the process.

7. A process according to any one of claims 1 to 6, characterised in that the parameters Bo, $\gamma$, H, P, X, x are introduced into a computer connected to a programmable or microprocessor-controlled automaton which applies the increment x to each stage of the process.

FIG.2

FIG.1

FIG.3

**FIG. 4**